(19) Europäisches Patentamt / European Patent Office / Office européen des brevets

(11) **EP 2 662 744 B1**

(12) **FASCICULE DE BREVET EUROPEEN**

(45) Date de publication et mention
de la délivrance du brevet:
**01.03.2017 Bulletin 2017/09**

(51) Int Cl.:
*G05D 1/10* (2006.01)  *G05D 1/08* (2006.01)
*B64C 19/00* (2006.01)

(21) Numéro de dépôt: **13165041.8**

(22) Date de dépôt: **24.04.2013**

(54) **Procédé de commande de pilotage d'un aéronef**

Verfahren zur Bedienung der Steuerung eines Luftfahrzeugs

Piloting control method of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.05.2012 FR 1254316**

(43) Date de publication de la demande:
**13.11.2013 Bulletin 2013/46**

(73) Titulaire: **Airbus Operations**
**31060 Toulouse (FR)**

(72) Inventeurs:
• **Puyou, Guilhem**
**31400 Toulouse (FR)**
• **Eberle, Matthias**
**31170 Tournefeuille (FR)**
• **Perrin, Fabien**
**31000 Toulouse (FR)**
• **Manjon Sanchez, Javier**
**31100 Toulouse (FR)**

(74) Mandataire: **Santarelli**
**49, avenue des Champs-Elysées**
**75008 Paris (FR)**

(56) Documents cités:
**US-A- 5 001 646**    **US-A1- 2003 088 342**
**US-A1- 2004 093 130**

**Description**

La présente invention concerne un procédé de commande de pilotage d'un aéronef.

Dans les aéronefs modernes, le déplacement est contrôlé par le pilote au moyen de manettes des gaz, de mini-manches et de pédales. L'ordinateur de commande de vol interprète les actions du pilote sur ces éléments et commande les surfaces de contrôle pertinentes de l'appareil. Ces surfaces sont contrôlées électriquement et/ou hydrauliquement.

Le document US 2004/0093130 A1 (D1) divulgue un procédé de contrôle de stabilité d'un aéronef tri-mode dans lequel le pilote émet des commandes d'accélération via un manche et le système calcule un vecteur vitesse en conséquence.

Le document US 5,001,646 (D2) divulgue un système de commande de trajectoire d'hélicoptère dans lequel le pilote émet des commandes via un manche et le système calcule un vecteur vitesse en conséquence.

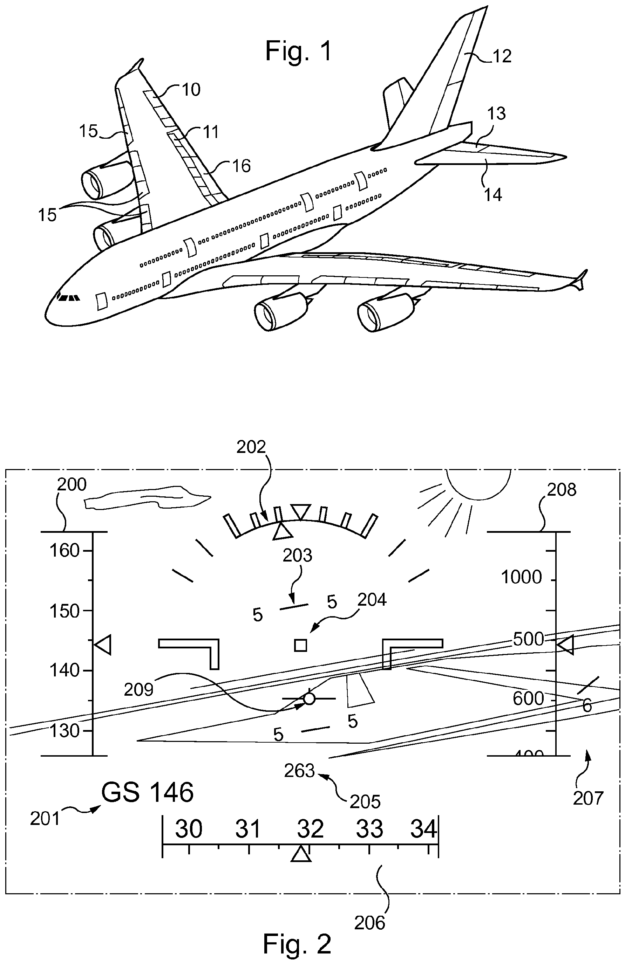

La **figure 1** illustre des exemples de surface de contrôle d'un aéronef : les ailerons 10, les destructeurs de portance 11 (« *spoilers* » en anglais), les gouvernes de direction 12 (« *rudders* » en anglais), les gouvernes de profondeur 13 (« *elevators* » en anglais), le plan horizontal réglable 14, les becs de bord d'attaque 15 et les volets 16.

Les ordinateurs de commande de vol des aéronefs de transport permettent usuellement au pilote de contrôler l'attitude de l'aéronef (angle de tangage, angle de roulis ou autre) en donnant via le manche des instructions d'attitude de l'aéronef ou de changement d'attitude. Ce contrôle de l'attitude de l'aéronef permet au pilote de modifier l'orientation du vecteur-vitesse VV (« *velocity vector* en anglais) de l'aéronef et par conséquent la trajectoire de celui-ci dans l'espace.

L'orientation de ce vecteur est définie par l'angle de route (« *track angle* » en anglais) et l'angle de pente de la trajectoire de vol (« *flight path angle* » en anglais).

Le vecteur-vitesse de l'aéronef est une information aujourd'hui présentée au pilote pour aider le pilote dans sa manoeuvre de l'aéronef.

La **figure 2** illustre une interface graphique d'un écran de contrôle de poste de pilotage (« *Head-Up Display* » en anglais).

Cette interface fournit diverses informations comme par exemple l'échelle de vitesse 200 (« *Speed scale* » en anglais), la vitesse par rapport au sol 201 (« *Ground speed* » en anglais), l'angle de roulis 202 (« *Bank angle* » en anglais), l'échelle de tangage 203 (« *Pitch scale* » en anglais), l'assiette de référence longitudinale 204 (« *Aircraft reference* » en anglais), l'altitude relative de l'aéronef par rapport au sol 205 (« *Radio Height* » en anglais), usuellement issue d'une mesure radio altimétrique, l'échelle de cap 206 (« *Heading/track scale* » en anglais), la vitesse verticale 207 (« *vertical velocity* » en anglais), l'altitude relative au calage altimétrique 208 (« *altitude* » en anglais).

L'interface comporte également une mire 209 représentant le point vers lequel le vecteur-vitesse de l'aéronef pointe.

Une telle interface permet au pilote de pouvoir connaître en temps réel l'orientation du vecteur-vitesse par rapport à l'environnement de l'aéronef. En outre, le pilote peut voir presque en temps réel l'évolution de l'orientation du vecteur-vitesse en fonction de ses actions sur les commandes du poste de pilotage (mini-manche, manette, etc.). A l'atterrissage, le pilote est également aidé puisqu'il peut faire en sorte de garder la mire représentant le vecteur-vitesse sur la piste d'atterrissage, garantissant ainsi une approche précise de la piste.

Les inventeurs ont toutefois considéré que des améliorations pouvaient être apportées à la manière de piloter un aéronef en utilisant ce type d'interface.

Les inventeurs ont remarqué qu'il existe un temps de latence entre le moment où le pilote constate la présence de la mire à un endroit et actionne les organes de l'appareil, et le moment où il peut constater le résultat de ces actions sur le vecteur-vitesse (nouvelle position de la mire) afin d'actionner une nouvelle fois les organes de l'appareil. Ce temps de latence peut notamment être dû au temps de réponse des actionneurs et à la dynamique du vol de l'aéronef.

Ainsi, le pilote doit anticiper cette dynamique et prévoir le résultat sur le vecteur-vitesse des diverses actions qu'il mène. Le pilote doit en fait décider d'amener la mire d'un point A vers un point B et trouver les bonnes actions à mettre en oeuvre pour ce faire (déterminer les surfaces de commande à mettre en oeuvre et déterminer l'action appropriée sur ces surfaces).

Les inventeurs ont donc mis à jour un besoin pour améliorer le mode de pilotage des aéronefs.

La présente invention s'inscrit dans ce cadre.

Un **premier aspect** de l'invention concerne un procédé selon la revendication 1.

Il est ainsi possible de faciliter la prise en main de l'aéronef et le pilotage.

Pour simplifier le pilotage par l'équipage, le vecteur-vitesse peut être affiché dans une interface graphique dans laquelle le vecteur-vitesse est représenté par rapport à la vue de l'environnement extérieur à partir du poste de pilotage.

La présente invention peut être utile notamment en cas de conditions perturbées telles que des turbulences ou des rafales de vent. La simplification du pilotage ainsi que l'introduction d'un niveau supérieur d'asservissement (asservissement du vecteur-vitesse en plus de l'asservissement en attitude) permet une meilleure tenue de la trajectoire dans l'espace.

Avec la simplification du pilotage, le pilote peut faire face plus aisément à des situations critiques, ce qui améliore la sécurité de l'aéronef.

Le pilote peut utiliser le mini-manche pour faire évoluer le vecteur-vitesse cible ce qui réduit le nombre de manipulations pour le pilote et ce qui permet de définir des instructions proches du résultat visible par le pilote sur l'interface de pilotage (« Head-up Display » par exemple).

Le déplacement de l'aéronef étant défini par le pilote en termes de vecteur-vitesse, il n'a plus à déterminer les différents paramètres de déplacement (angle de roulis, angle de tangage etc.) pour se diriger. L'affichage du vecteur-vitesse cible (en complément du vecteur-vitesse courant) permet de réduire le besoin d'anticipation par le pilote.

A partir du vecteur-vitesse cible, les surfaces de contrôle à commander ainsi que les commandes associées sont définies automatiquement.

Comparativement aux modes de pilotage de l'art antérieur, le mode de pilotage selon des modes de réalisation de l'invention nécessite moins d'activité du pilote (moins de manipulations et moins d'anticipation mentale). Cela réduit ainsi les temps de réaction du pilote. Cela limite également les risques de mauvaise manipulation.

Par exemple au moins un actionneur est apte à mettre en mouvement une surface de contrôle de l'aéronef.

Ainsi, le pilote peut agir directement sur l'orientation du vecteur-vitesse de l'aéronef.

Au moins une instruction de modification du vecteur-vitesse courant de l'aéronef peut concerner un angle route et/ou un angle de pente de la trajectoire de vol.

Ces angles permettent de définir simplement et directement le vecteur-vitesse-cible.

Le procédé peut en outre comporter les étapes suivantes de :

- réception d'une instruction de modification du vecteur-vitesse cible déterminé, et
- modification du vecteur-vitesse cible en fonction de ladite commande reçue, ladite commande d'actionnement étant déterminée à partir du vecteur-vitesse-cible ainsi modifié.

Ainsi, il est possible de donner directement une définition du vecteur-vitesse-cible, sans référence au vecteur-vitesse-courant.

Cette définition directe peut par exemple être mise en oeuvre en utilisant l'interface de sélection des consignes du pilote automatique (le pilote automatique peut dans certains appareils être désigné par FCU, sigle de « Flight Control Unit » en anglais).

Cette définition directe, par le pilote ou le pilote automatique, peut être plus rapide, par exemple en cas d'urgence ou de perte de repères.

Par exemple, le procédé comporte en outre les étapes suivantes de :

- détection d'une mise en mouvement d'une interface de pilotage,
- détermination de ladite au moins une instruction de modification en fonction du mouvement détecté.

Ainsi, le pilote peut déterminer le vecteur-vitesse cible en manipulant un élément de pilotage comme par exemple un mini-manche ou un élément d'une interface graphique.

Le procédé peut en outre comporter une étape de génération d'au moins un signal d'affichage d'une interface graphique de pilotage comportant une représentation dudit vecteur-vitesse courant, ledit signal étant configuré pour provoquer l'affichage d'une représentation du vecteur-vitesse cible.

Cette étape n'entend pas réaliser une simple présentation du contenu cognitif du vecteur-vitesse cible, mais elle entend offrir un agencement particulier de cette information pour permettre au pilote d'avoir une interaction efficace avec l'aéronef.

L'affichage selon cette étape offre un effet technique qui se manifeste au niveau de l'activité mentale de l'utilisateur en lui permettant de choisir une attitude à donner à l'aéronef et de se rendre compte avec plus de rapidité, plus d'efficacité et plus de sécurité des manoeuvres qu'il effectue sur l'aéronef.

Le procédé peut en outre comporter une étape de génération d'un signal d'affichage configuré pour provoquer l'affichage d'un élément de d'aide à l'alignement avec une trajectoire de pilotage cible, ledit élément étant associé à ladite représentation graphique du vecteur-vitesse cible.

L'aide à l'alignement peut notamment permettre de faciliter l'atterrissage sur la piste.

Par exemple, le procédé peut en outre comporter une étape de génération d'un signal d'alerte en cas d'anomalie d'alignement avec la trajectoire cible et/ou d'anomalie de concordance entre le vecteur-vitesse cible et la trajectoire cible.

Ainsi, il est possible d'améliorer la sécurité de l'aéronef en cas de mauvaise manipulation.

Un **deuxième aspect** de l'invention concerne un programme d'ordinateur ainsi qu'un produit programme d'ordinateur et un support de stockage pour de tels programme et produit, permettant la mise en oeuvre d'un procédé selon le premier aspect lorsque le programme est chargé et exécuté par un processeur d'un système de commande de pilotage d'un aéronef.

Un **troisième aspect** de l'invention concerne un système de commande de pilotage d'un aéronef selon la revendication 14.

Ce système comporte une unité de traitement configurée pour mettre en oeuvre un procédé selon le premier aspect. L'unité de traitement est notamment configurée pour recevoir au moins une première instruction de modification d'un vecteur-vitesse courant de l'aéronef, déterminer un vecteur-vitesse cible de l'aéronef, à partir de ladite au moins une première instruction reçue, et déterminer, à partir au moins dudit vecteur-vitesse cible, au moins une commande d'actionnement à destination d'au moins un actionneur de l'aéronef en vue de modifier le déplacement de l'aéronef conformément à ladite au moins une première instruction reçue.

L'unité de traitement peut par ailleurs être configurée pour générer au moins un signal d'affichage d'une interface graphique de pilotage comportant une représentation dudit vecteur-vitesse courant, ledit signal étant configuré pour provoquer l'affichage d'une représentation du vecteur-vitesse cible.

L'unité de traitement peut en outre être configurée pour générer un signal d'affichage configuré pour provoquer l'affichage d'un élément d'aide à l'alignement avec une trajectoire de pilotage cible, ledit élément étant associé à ladite représentation graphique du vecteur-vitesse cible.

Le système selon le troisième aspect peut comporter d'autres éléments pour mettre en oeuvre d'autres caractéristiques évoquées pour le procédé selon le premier aspect en termes de procédé. L'unité de traitement peut en outre être configurée pour permettre la mise en oeuvre de ces caractéristiques.

Un **quatrième aspect** de l'invention concerne un aéronef comportant un système selon le troisième aspect, par exemple un avion.

Les objets selon les deuxième, troisième et quatrième aspects de l'invention procurent au moins les mêmes avantages que ceux procurés par le procédé selon le premier aspect.

D'autres caractéristiques et avantages de l'invention apparaîtront à la lecture de la présente description détaillée qui suit, à titre d'exemple non limitatif, et des figures annexées parmi lesquelles, outre les figures 1 et 2 :

- la **figure 3** illustre les angles utilisés pour définir le vecteur-vitesse;
- la **figure 4** illustre une structure de système de commande selon des modes de réalisation ;
- la **figure 5** est un schéma bloc illustrant une unité de traitement selon des modes de réalisation ;
- la **figure 6** est un exemple de courbe de conversion d'un mouvement de mini-manche en commande de modification d'angle de roulis ;
- les **figures 7 à 9** illustrent des interfaces graphiques selon des modes de réalisation ; et
- les **figures 10 à 12** sont des organigrammes d'étapes de procédés selon des modes de réalisation.

Dans la suite, il est décrit une nouvelle approche dans le pilotage des aéronefs. Ce pilotage est simplifié par la définition, par le pilote, de l'attitude de l'aéronef directement par le vecteur-vitesse. Cette définition peut se faire via un mini-manche et un écran de contrôle. Le pilote dirige le vecteur-vitesse cible sur l'écran de contrôle puis le système de commande de vol de l'aéronef asservit le vecteur-vitesse courant sur le vecteur-vitesse cible ainsi défini par le pilote.

Le pilote peut commander directement le résultat de ses actions sur les organes de l'aéronef en définissant un vecteur-vitesse cible.

Avant de décrire plus en détail un système de contrôle selon des modes de réalisation et un procédé associé, les grandeurs utilisées pour définir le vecteur-vitesse sont d'abord décrites.

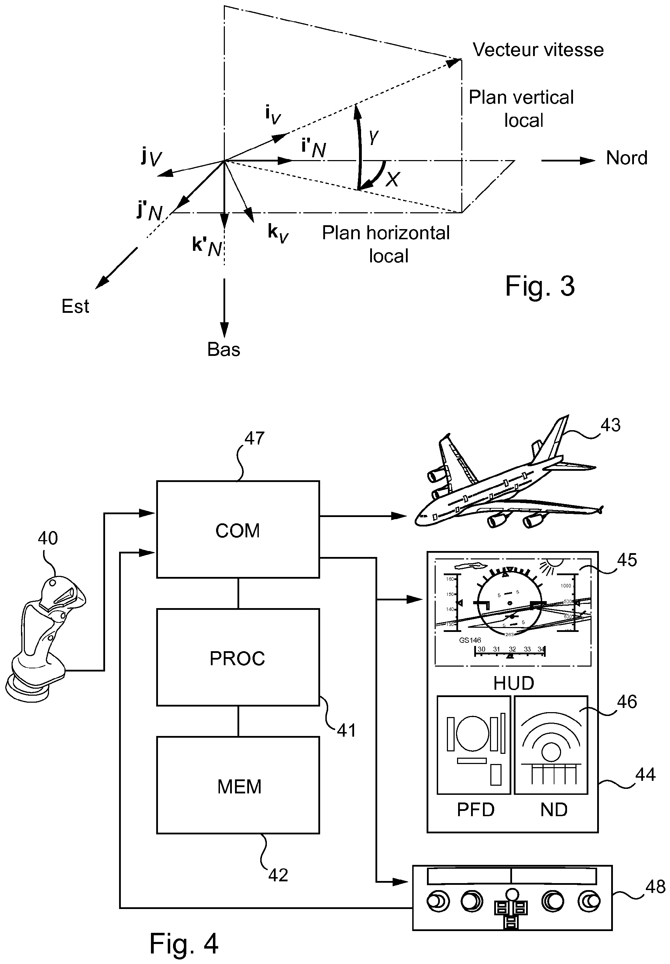

La **figure 3** est un schéma représentant l'angle de pente de la trajectoire de vol $\gamma$ (gamma) et l'angle de route $\chi$ (chi).

Le vecteur-vitesse VV de l'aéronef est défini dans l'espace défini par le plan tangent géographique et la verticale (cette espace est appelé « North-East-Down frame » en terminologie anglo-saxonne). Les vecteurs de base de cet espace $i'_N$, $j'_N$ et $k'_N$ correspondent respectivement au Nord géographique, à l'Est géographique et à la verticale vers le bas (sens de la gravité). Le plan $(i'_N, j'_N)$ définit le plan tangent géographique (ou plan horizontal local).

Une base formée par les vecteurs $i_v$, $j_v$ et $k_v$ est associée à l'aéronef. Le vecteur $i_v$ porte le vecteur-vitesse. Le vecteur $i_v$ forme avec le plan tangent géographique l'angle $\gamma$ (gamma). L'angle $\chi$ (chi) est l'angle entre la projection du vecteur-vitesse dans le plan tangent géographique et le vecteur $i'_N$.

Ces angles sont utilisés dans la suite pour décrire le contrôle de l'aéronef en fonction du vecteur-vitesse.

La **figure 4** décrit une structure générale d'un système de contrôle de vol de l'aéronef selon des modes de réalisation.

Le pilote actionne un mini-manche 40 dont le mouvement provoque la génération d'un signal d'actionnement. Ce signal d'actionnement est reçu par une unité de communication 47 qui la transmet à une unité de traitement 41.

L'unité de traitement 41 convertit le signal d'actionnement en signal d'instruction de modification du vecteur-vitesse courant de l'aéronef.

A partir du signal d'instruction, l'unité de traitement détermine un vecteur-vitesse cible souhaité par le pilote.

L'unité de traitement peut à cet effet utiliser diverses données relatives à l'état courant de l'aéronef comme par exemple la vitesse vraie de l'aéronef par rapport à l'air ($V_{TAS}$, TAS est acronyme de « *True Aispeed* » en anglais), l'angle de pente de la trajectoire de vol (FPA, sigle de « *Flight Path Angle* » en anglais), l'angle de route (TRK, sigle de « *Track angle* » en anglais), ou autre. L'unité de traitement peut par ailleurs utiliser d'autres données comme par exemple la masse de l'appareil, le centre de gravité, la configuration hyper-sustentée, ou autre.

Toutes ces données sont par exemple stockées dans une unité de mémoire 42.

Une fois que le vecteur-vitesse-cible a été déterminé, l'unité de traitement peut générer des signaux de commande à destination des surfaces de commande de l'aéronef, ou plus précisément à destination des actionneurs 43 de ces surfaces. Ces signaux de commande sont configurés pour modifier le déplacement de l'aéronef en sorte que le vecteur-vitesse courant coïncide avec le vecteur-vitesse cible. En d'autres termes, un asservissement est réalisé sur le vecteur-vitesse. Les signaux de commande sont par exemple transmis aux actionneurs via l'unité de communication 47.

Par ailleurs, l'unité de traitement peut en outre être configurée pour générer un signal d'affichage à destination d'une unité d'affichage 44 comportant par exemple un écran de contrôle 45 de type « *Head-up Display* » et des écrans de type PFD et ND (« *Primary Flight Display* » et « *Navigation Display* » en anglais) 46. Ce signal d'affichage est apte à provoquer l'affichage dans l'interface graphique de pilotage affichée sur l'écran de contrôle d'un élément graphique représentant le vecteur-vitesse cible tel que déterminé par l'unité de traitement à partir de la consigne du pilote. Les signaux d'affichage sont par exemple transmis à l'unité d'affichage via l'unité de communication.

Alternativement, ou en combinaison, le signal d'affichage peut être émis à destination de l'unité de contrôle de vol 48 (FCU, sigle de « *Flight Control Unit* » en anglais). Cette unité peut être l'interface entre le pilote et le pilote automatique. Cette unité peut être configurée pour générer un signal représentant directement le vecteur-vitesse cible souhaité par le pilote. A cet effet, l'unité de commande de vol peut comporter une interface comme par exemple des touches, ou des molettes permettant au pilote de définir le vecteur-vitesse-cible. Par exemple, le pilote entre les valeurs des angles de pente de la trajectoire de vol γ (gamma) et de route χ (chi). Le signal généré représentant le vecteur-vitesse cible est alors fourni à l'unité de traitement, par exemple via l'unité de communication. L'interface de l'unité 48 peut aussi comporter une interface affichant les angles de pente de la trajectoire de vol γ (gamma) et de route χ (chi) du vecteur-vitesse courant.

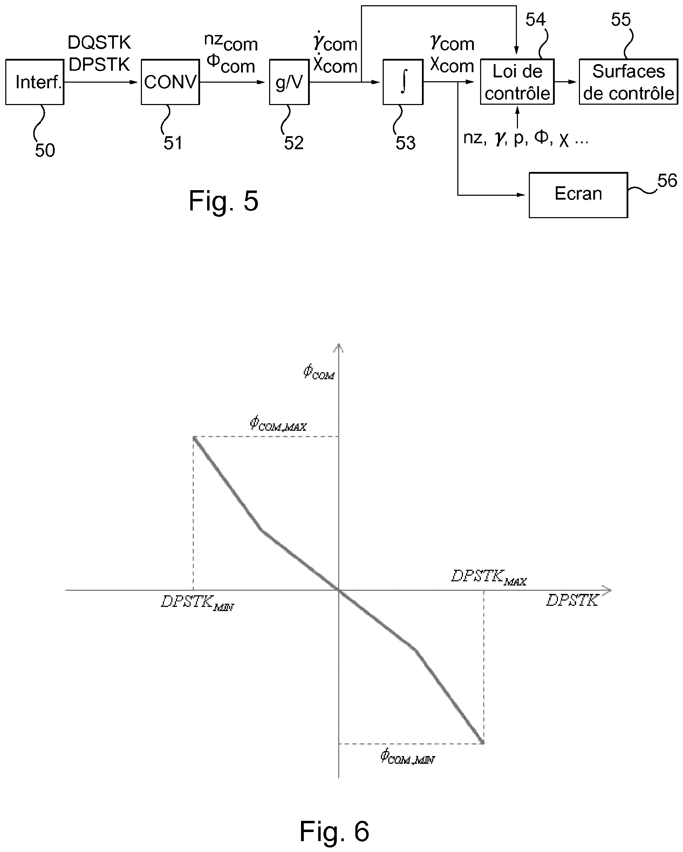

D'une manière générale, l'unité de mémoire 42 comporte une mémoire vive pour stocker de manière non durable des données de calcul utilisées lors de la mise en oeuvre d'un procédé selon un mode de réalisation. L'unité de mémoire comporte par ailleurs une mémoire non volatile (par exemple du type EEPROM) pour stocker par exemple un programme d'ordinateur selon un mode de réalisation pour son exécution par un processeur (non représenté) de l'unité de traitement 41. La mémoire peut également stocker les données relatives à l'état de l'aéronef comme déjà évoqué et des tables de correspondance permettant d'interpréter les mouvements du mini-manche (par exemple la table représente la courbe de la figure 6 décrite ci-après).

La **figure 5** est un schéma bloc illustrant plus en détails le fonctionnement de l'unité de traitement du système selon la figure 4.

On suppose que le pilote de l'aéronef dispose d'un mini-manche qui peut pivoter selon deux axes : un axe de tangage (en manoeuvre du mini-manche d'avant en arrière) et un axe de roulis (manoeuvre du mini-manche de gauche à droite). Par exemple, chaque type de pivotement du mini-manche commande la modification d'un angle du vecteur-vitesse courant.

Ainsi, une unité de contrôle du mini-manche 50 détermine le déplacement courant du mini-manche et génère au moins un signal DQSTK et/ou DPSTK respectivement associés au déplacement selon les axes de tangage et de roulis du mini-manche.

Le déplacement du mini-manche selon l'axe de roulis est converti par une unité de conversion 51 en angle de roulis $\Phi_{COM}$ (Phi$_{COM}$) du vecteur-vitesse selon une courbe caractéristique, par exemple telle qu'illustrée par la **figure 6.**

La courbe de la figure 6 représente la variation de l'angle de roulis commandé entre $\Phi_{COM,MAX}$ et $\Phi_{COM,MIN}$ en fonction de l'angle de roulis du mini-manche entre DPSTK$_{MIN}$ et DPSTK$_{MAX}$.

De retour à la figure 5, le déplacement du mini-manche selon l'axe de tangage est converti par l'unité de conversion 51 en commande de facteur de charge nz$_{COM}$ selon une autre courbe caractéristique (non représentée).

L'angle de roulis $\Phi_{COM}$ est ensuite délivré à une unité de gain 52 pour le convertir en taux d'angle de route $\dot{\chi}_{COM}$. Par exemple, la conversion est effectuée selon la formule suivante : $\dot{\chi}_{COM} = \frac{g}{V_{GND}} \cdot \phi_{COM}$, où g est la constante gravitationnelle et $V_{GND}$ est la vitesse par rapport au sol.

Le signal issu de l'unité de gain 52 représentant le taux d'angle de route est fourni à une unité d'intégration 53 qui permet de réaliser une opération d'intégration sur le taux d'angle de route et d'obtenir un signal représentant l'angle de route selon la formule $\chi_{COM} = \int \dot{\chi}_{COM} dt$.

La commande de facteur de charge nz$_{COM}$ est également fournie à l'unité de gain 52 qui fournit en sortie un signal représentant la dérivée de l'angle de pente de la trajectoire de vol. Par exemple, la conversion est effectuée selon la formule suivante : $\dot{\gamma}_{COM} = \frac{g}{V_{TAS}} \cdot nz_{COM}$, où g est la constante gravitationnelle et $V_{TAS}$ est la vitesse vraie de l'aéronef par rapport à l'air.

Le signal issu de l'unité de gain 52 représentant la dérivée de l'angle de pente de la trajectoire de vol est fourni à l'unité d'intégration 53 qui permet de réaliser une opération d'intégration sur cette dérivée et d'obtenir un signal représentant l'angle de pente de la trajectoire de vol selon la formule $\gamma_{COM} = \int \dot{\gamma}_{COM} dt$.

Lorsque le pilote actionne le mini-manche puis le relâche, l'angle de pente de la trajectoire de vol et/ou l'angle de route est modifié puis reste constant.

En sortie de l'unité d'intégration 53, le signal représentant l'angle de route commandé ou l'angle de pente de la trajectoire de vol commandé est délivré à une unité de loi de contrôle 54. Cette unité de loi de contrôle est configurée pour déterminer, à partir de l'état courant de l'aéronef, les commandes à générer à destination des actionneurs des surfaces de contrôle (représentés par une unité de contrôle de surface 55). L'état courant de l'aéronef peut notamment être défini par l'angle $\chi$ de route courant, l'angle $\gamma$ de pente de la trajectoire de vol courant, l'angle $\Phi$ de roulis courant, le facteur de charge $n_z$ courant, la vitesse de tangage $q$, la vitesse de lacet $r$, l'angle de dérapage $\beta$ et le taux de roulis $p$. L'unité de loi de contrôle peut aussi utiliser le ou les signaux issus de l'unité de gain 52.

A titre d'exemple on peut utiliser sur l'axe de tangage la mise en cascade d'une loi d'asservissement et de maintient de pente (LOI n°1) avec une loi de contrôle du facteur de charge (LOI n°2). Ainsi l'ordre gouverne de profondeur DQ peut être calculé de la façon suivante :

$$\text{LOI n°2 : } DQ = K1 * q + K2 * n_z + K3 * \int (n_z - n_{zc}) + K4 * n_{zc}$$

$$\text{LOI n°1 : } n_{zc} = K5 * (\gamma - \gamma_{COM}) + K6 * n_z + K7 * nz_{COM}$$

Les variables K1, K2, K3, K4, K5, K6 et K7 sont par exemple les gains d'asservissement des lois dont les réglages dépendent de l'aéronef et des objectifs de conception (temps de réponse de l'asservissement, rejet de perturbations, ou autre). La LOI n°2 est par exemple identique à la loi de pilotage manuel longitudinal préexistante. La LOI n°1 peut être une dérivée de la loi d'asservissement de pente préexistante du pilote automatique. Pour avoir un rejet de perturbation identique au pilote automatique (PA) en l'absence de mouvement du manche pilote, le gain K5 de la loi PA peut être conservé. Les gains K6 et K7 sont introduit et réglés afin de retrouver le comportement de la loi manuelle sur un ordre pilote au mini-manche.

Sur les axes de roulis et de lacet, il est possible d'utiliser de la même façon la mise en cascade d'une loi d'asservissement et de maintien de route (LOI n°3) avec une loi de contrôle simultané du roulis et du lacet (LOI n°4) nommée Ystar. Ainsi, l'ordre global sur les surfaces de roulis DP et la gouverne de direction DR peut être calculé de la façon suivante :

$$\text{LOI n°4 : } DP = K12 * p + K13 * r + K14 * \phi + K15 * \beta + K16 * \dot{\phi}_c$$

$$DR = K21 * p + K22 * r + K23 * \phi + K24 * \beta + K25 * \dot{\phi}_c$$

$$\text{LOI n°3 : } \dot{\phi}_c = K8 * (K9 * (\chi - \chi_{COM}) - \phi) + K10 * p + K11 * \Phi_{COM}$$

Les variables K12, K13, K14, K15, K16, K21, K22, K23, K24, K25, K8, K9, K10 et K11 sont par exemple les gains d'asservissement des lois dont les réglages dépendent de l'aéronef et des objectifs de conception (temps de réponse de l'asservissement, rejet de perturbations ...). La LOI n°4 est par exemple identique à la loi de pilotage manuel latérale préexistante. La LOI n°3 est une dérivée de la loi d'asservissement de route préexistante dans le pilote automatique. Pour avoir un rejet de perturbation identique au pilote automatique en l'absence de mouvement du manche pilote, les gains K8 et K9 seront conservés de la loi PA. Les gains K10 et K11 sont introduits et réglés afin de retrouver le comportement de la loi manuelle sur un ordre pilote au mini-manche.

Afin de générer le signal d'affichage du vecteur-vitesse cible, une unité de contrôle d'affichage 56 reçoit la sortie de l'unité d'intégration 53.

L'unité de traitement, par exemple avec une structure comme décrite en référence à la figure 5, peut permettre de commander les surfaces de contrôle de l'aéronef pour amener le vecteur-vitesse courant de l'aéronef à coïncider avec le vecteur-vitesse cible défini par le pilote au moyen du mini-manche (ou de l'unité FCU 48).

Par exemple, l'unité de loi de contrôle comporte deux sous-unités. Une sous-unité permet d'asservir l'angle de route de l'aéronef et une sous-unité permet d'asservir l'angle de pente de trajectoire de vol.

L'unité de traitement peut en outre être configurée pour respecter des critères des qualités de vol définis dans les régulations de l'aviation.

L'unité de traitement peut en outre être configurée pour automatiser l'asservissement en sorte que le comportement de l'aéronef reste proche de celui qu'il aurait avec un procédé de commande de pilotage classique (afin de ne pas perturber un pilote qui passerait d'un mode de pilotage à l'autre).

Il est en outre possible de placer l'unité de traitement dans un fonctionnement alternatif avec le pilote automatique. Ainsi, par exemple, lorsqu'il n'est détecté aucune activité sur le mini-manche, le pilotage peut être repris par le pilote automatique.

La détermination d'un vecteur-vitesse cible, pour ensuite asservir le vecteur-vitesse de l'aéronef, peut être couplée à un mécanisme d'interface graphique permettant d'améliorer l'interaction du pilote avec l'aéronef et améliorant ainsi le pilotage en efficacité et en sécurité.

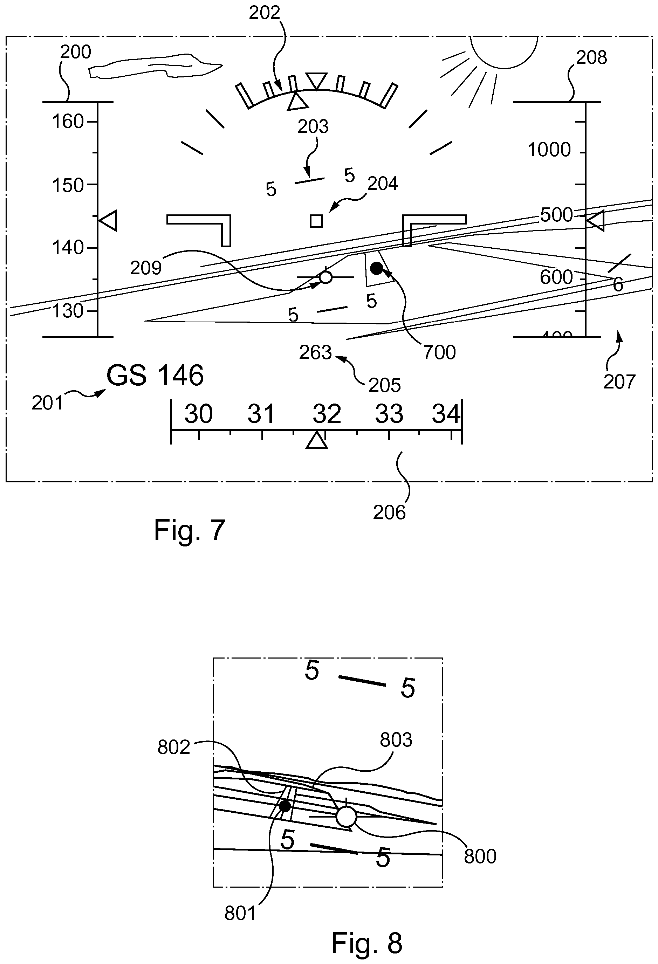

La **figure 7,** illustre une interface graphique permettant d'afficher une représentation du vecteur-vitesse cible tel que défini par le pilote via le mini-manche (ou l'unité FCU).

Cette figure reprend l'interface présentée dans la figure 2. Sur l'interface selon la figure 7, un point 700 représente la direction du vecteur-vitesse cible. Le point 700 (ou tout autre type d'indication) se déplace en temps réel en fonction des actions du pilote sur le mini-manche.

En outre, il est possible de mettre en oeuvre un mécanisme d'aide à l'alignement.

Ce mécanisme peut être activé ou désactivé par le pilote. Alternativement, ou en combinaison, ce mécanisme peut être activé ou désactivé automatiquement en fonction d'un ou plusieurs paramètres. Par exemple, ce paramètre peut être l'altitude par rapport au sol.

L'utilité d'un tel mécanisme d'alignement peut être d'aligner précisément l'aéronef avec une piste d'atterrissage.

Il peut s'agir d'afficher une ligne verticale sur l'écran au niveau du point représentant la direction du vecteur-vitesse cible.

La **figure 8** représente une interface mettant en oeuvre le mécanisme d'aide à l'alignement.

Cette interface comporte une mire 800 représentant la direction du vecteur-vitesse courant de l'aéronef, un point 801 (ou tout autre indication graphique) représentant la direction du vecteur-vitesse cible et une ligne verticale 802 permettant au pilote d'aligner l'aéronef avec la piste d'atterrissage 803.

La ligne verticale tourne dans l'interface en fonction de l'angle de roulis en sorte qu'elle reste perpendiculaire aux lignes de l'échelle de tangage 203.

La ligne verticale peut être légèrement décalée par rapport à l'indication représentant la direction du vecteur-vitesse cible afin de laisser un espace visible pour la mire lorsque le vecteur-vitesse cible et le vecteur-vitesse courant coïncident.

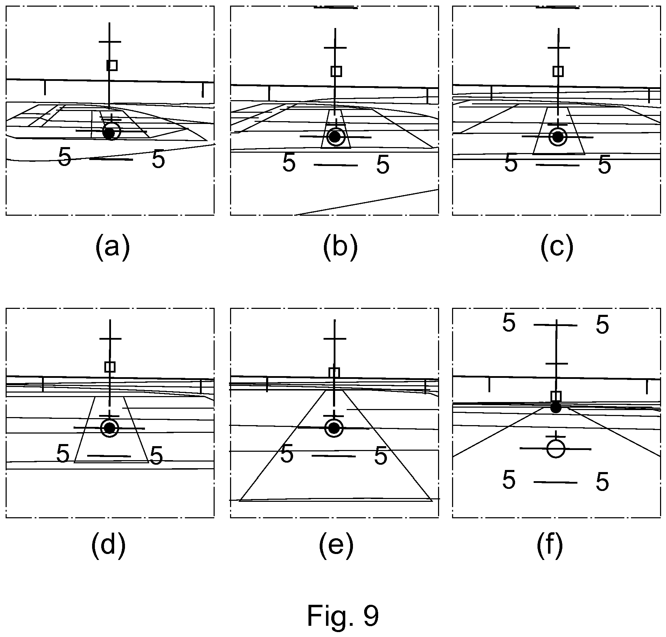

La **figure 9** représente une série de captures d'écran illustrant le mécanisme d'aide à l'alignement dans le cadre d'une procédure d'atterrissage.

Tout d'abord, le pilote intercepte la ligne centrale de la piste d'atterrissage en plaçant le point représentant le vecteur-vitesse-cible à droite du début de la ligne centrale de la piste d'atterrissage (a). Ensuite, au fur et à mesure que l'aéronef s'approche de la piste, le pilote fait avancer le point sur la ligne centrale.

Le pilote peut corriger précisément les déviations de l'aéronef par rapport à la piste comme illustré sur la capture d'écran (b). Il peut faire en sorte d'aligner la ligne verticale d'aide à l'alignement avec la ligne centrale de la piste, ce qui amène l'aéronef à se placer dans la direction de la piste.

Dans les captures (c), (d) et (e), il n'y a pas besoin de correction car le vecteur-vitesse courant, représenté par la mire, suit exactement le vecteur-vitesse cible, représenté par le point.

La capture d'écran (f) montre une rupture dans le suivi du vecteur-vitesse-cible par le vecteur-vitesse-courant dû à l'arrondi juste avant l'atterrissage (le « *flare* » en terminologie anglo-saxonne). L'aide à l'alignement permet tout de même encore de se déplacer correctement sur la piste.

Selon des modes de réalisation, des alertes acoustiques ou visuelles peuvent être émises dans le poste de pilotage au cas où il est détecté un mauvais alignement avec la piste et/ou la sélection par le pilote d'une mauvaise piste (par exemple le point représentant le vecteur-vitesse cible est posé sur une mauvaise piste).

Cette alerte peut être mise en oeuvre selon l'altitude courante issue d'une mesure radio, par exemple en dessous d'un seuil.

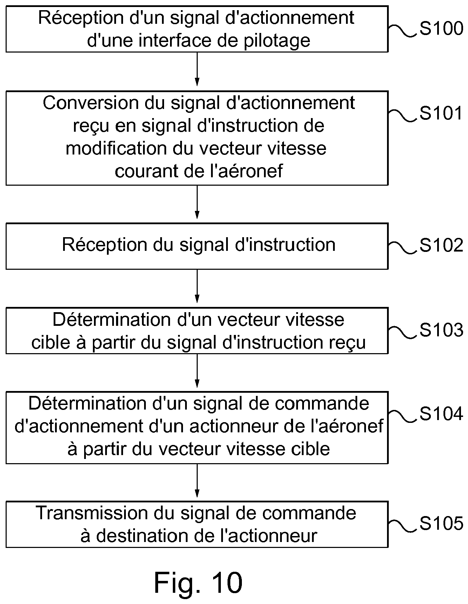

La **figure 10** est un organigramme d'étapes d'un procédé de commande de pilotage d'un aéronef selon un mode de réalisation. Ce procédé peut par exemple être mis en oeuvre par un système selon la figure 4.

Lors d'une première étape S100, un signal d'actionnement est reçu de la part d'une interface de pilotage. Par exemple, il s'agit d'un signal émis suite à la mise en mouvement d'un mini-manche. D'autres interfaces de pilotage sont envisageables. En outre l'unité FCU déjà évoquée dans la présente description, une interface de pilotage peut être une interface graphique sur écran tactile ou associée à des touches de sélection de commandes de pilotage.

Une fois le signal d'actionnement reçu, il est converti lors d'une étape S101 en un signal d'instruction de modification du vecteur-vitesse courant de l'aéronef. Le signal d'actionnement est interprété, par exemple en utilisant une courbe de correspondance telle qu'illustrée par la figure 6.

Les étapes S100 et S101 sont par exemple mises en oeuvre par une unité de contrôle de l'interface de pilotage.

Le signal d'instruction généré est ensuite transmis à l'unité de traitement qui le reçoit lors d'une étape S102.

Le signal d'instruction est ensuite traité pour déterminer un vecteur-vitesse cible lors d'une étape S103.

Lors de l'étape S104, un signal d'actionnement d'un actionneur de l'aéronef est déterminé à partir du signal d'instruction reçu. Ce signal d'actionnement vise à actionner un ou plusieurs organes de l'aéronef permettant de modifier le vecteur-vitesse courant pour l'amener à coïncider avec le vecteur-vitesse cible. Par exemple, les actionneurs sont associés aux surfaces de contrôle de l'aéronef.

Lors d'une étape S105, le signal de commande est transmis à un ou plusieurs actionneurs.

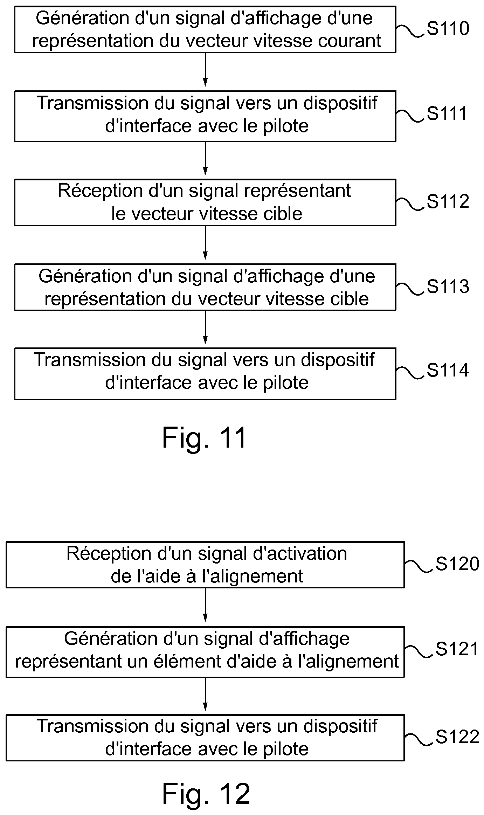

Le processus illustré par la figure 10 peut être complété par un processus d'interface graphique, décrit en référence à la **figure 11.**

Lors d'une étape S110, un signal d'affichage d'une représentation du vecteur-vitesse courant est généré, il est ensuite transmis lors d'une étape S111 vers un dispositif d'interface avec le pilote, par exemple un écran. Le vecteur-vitesse courant peut par exemple être représenté par une mire au centre d'un écran montrant au pilote une vue vers l'avant de l'aéronef.

Lors d'une étape S112, le signal représentant le vecteur-vitesse cible est reçu (par exemple il s'agit de celui déterminé lors de l'étape S103 évoqué en référence à la figure 10).

A partir de ce signal, il est généré lors de l'étape S113 un signal d'affichage représentant le vecteur cible. Par exemple, il s'agit d'un marqueur (comme par exemple un point) affiché sur un écran qui indique la direction de ce vecteur.

Le signal d'affichage est ensuite transmis vers le dispositif d'interface avec le pilote lors de l'étape S114.

Comme déjà évoqué ci-dessus dans la présente description, un mécanisme d'aide à l'alignement peut être mis en oeuvre. Un processus de mise en oeuvre de ce mécanisme est décrit en référence à l'organigramme de la **figure 12.**

Lors d'une étape S120, un signal d'activation du mécanisme d'aide à l'alignement est reçu. Par exemple, ce signal est généré suite à l'activation du mécanisme par le pilote via un bouton d'interface. Alternativement, ou en combinaison, ce signal est généré automatiquement lorsque l'aéronef descend en dessous d'une altitude seuil par rapport à une mesure radio qui caractérise par exemple une phase d'approche du sol pour atterrissage.

Ensuite, une fois le mécanisme activé, un signal d'affichage d'un élément d'aide à l'alignement est généré lors d'une étape S121.

Ce signal est ensuite transmis au dispositif d'interface avec le pilote lors d'une étape 122. Comme déjà décrit, l'élément évolue en fonction du déplacement de l'aéronef.

Un programme d'ordinateur pour la mise en oeuvre d'un procédé selon un mode de réalisation de l'invention peut être réalisé par la personne du métier à la lecture des organigrammes des figures 10, 11 et 12 et de la présente description détaillée.

La présente invention a été décrite et illustrée dans la présente description détaillée et dans les figures. Bien entendu, la présente invention ne se limite pas aux formes de réalisation décrites, d'autres variantes et combinaisons de caractéristiques sont possibles. La description d'une caractéristique dans un mode de réalisation n'exclut pas la possibilité d'utiliser cette caractéristique dans un autre mode de réalisation. Ces variantes et modes de réalisation peuvent être déduits et mis en oeuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

**Revendications**

**1.** Procédé de commande de pilotage d'un aéronef comportant les étapes suivantes de :

- réception (S101) d'au moins une première instruction de modification de l'orientation d'un vecteur-vitesse courant de l'aéronef,
- détermination (S103) d'un vecteur-vitesse cible de l'aéronef, à partir de ladite au moins une première instruction reçue, et
- détermination (S104), à partir au moins dudit vecteur-vitesse cible, d'au moins une commande d'actionnement à destination d'au moins un actionneur de l'aéronef en vue de modifier le déplacement de l'aéronef conformément à ladite au moins une première instruction reçue,

le procédé étant **caractérisé en ce qu'**il comporte en outre les étapes suivantes de :

- réception d'une instruction de modification de l'orientation du vecteur-vitesse cible déterminé, et
- modification du vecteur vitesse cible en fonction de ladite instruction reçue, ladite commande d'actionnement étant déterminée à partir du vecteur-vitesse cible ainsi modifié.

2. Procédé selon la revendication 1, dans lequel ledit au moins un actionneur est apte à mettre en mouvement une surface de contrôle (10-16) de l'aéronef.

3. Procédé selon l'une des revendications précédentes, dans lequel au moins une instruction de modification du vecteur-vitesse courant de l'aéronef concerne un angle de route de la trajectoire de vol.

4. Procédé selon l'une des revendications précédentes, dans lequel au moins une instruction de modification du vecteur-vitesse courant de l'aéronef concerne un angle de pente de la trajectoire de vol.

5. Procédé selon l'une des revendications précédentes, comportant en outre les étapes suivantes de :

- détection (S100) d'une mise en mouvement d'une interface de pilotage,
- détermination (S102) de ladite au moins une instruction de modification en fonction du mouvement détecté.

6. Procédé selon l'une des revendications précédentes, comportant en outre une étape de génération (S113) d'au moins un signal d'affichage d'une interface graphique de pilotage comportant une représentation dudit vecteur-vitesse courant, ledit signal étant configuré pour provoquer l'affichage d'une représentation du vecteur-vitesse cible.

7. Procédé selon la revendication 6, comportant en outre une étape de génération (S121) d'un signal d'affichage configuré pour provoquer l'affichage d'un élément d'aide à l'alignement avec une trajectoire de pilotage cible, ledit élément étant associé à ladite représentation graphique du vecteur-vitesse cible.

8. Procédé selon la revendication 6 ou 7, comportant en outre une étape de génération d'un signal d'alerte en cas d'anomalie d'alignement avec la trajectoire cible et/ou d'anomalie de concordance entre le vecteur-vitesse cible et la trajectoire cible.

9. Procédé selon l'une des revendications 6 à 8, dans lequel ledit au moins un signal est configuré pour provoquer l'affichage de la représentation du vecteur-vitesse cible simultanément à l'affichage de la représentation dudit vecteur-vitesse courant.

10. Programme d'ordinateur comportant des instructions pour la mise en oeuvre d'un procédé selon l'une des revendications 1 à 9, lorsqu'il est chargé et exécuté par un processeur d'un système de commande de pilotage d'un aéronef.

11. Système de commande de pilotage d'un aéronef comportant une unité de traitement (41) configurée pour recevoir au moins une première instruction de modification de l'orientation d'un vecteur-vitesse courant de l'aéronef, déterminer un vecteur-vitesse cible de l'aéronef, à partir de ladite au moins une première instruction reçue, et déterminer, à partir au moins dudit vecteur-vitesse cible, au moins une commande d'actionnement à destination d'au moins un actionneur de l'aéronef en vue de modifier le déplacement de l'aéronef conformément à ladite au moins une première instruction reçue, le système de commande étant **caractérisé en ce que** ladite unité de commande est en outre configurée pour recevoir une instruction de modification de l'orientation du vecteur vitesse cible déterminé, et modifier le vecteur vitesse cible en fonction de ladite instruction reçue, ladite commande d'actionnement étant déterminée à partir du vecteur vitesse cible ainsi modifié.

12. Système selon la revendication 11, dans lequel l'unité de traitement est en outre configurée pour générer au moins un signal d'affichage d'une interface graphique de pilotage comportant une représentation dudit vecteur-vitesse courant, ledit signal étant configuré pour provoquer l'affichage d'une représentation du vecteur-vitesse cible.

13. Système selon la revendication 12, dans lequel l'unité de traitement est en outre configurée pour générer un signal d'affichage configuré pour provoquer l'affichage d'un élément de d'aide à l'alignement avec une trajectoire de pilotage cible, ledit élément étant associé à ladite représentation graphique du vecteur-vitesse cible.

**14.** Aéronef comportant un système selon l'une des revendications 11 à 13.

**Patentansprüche**

**1.** Verfahren zur Bedienung der Steuerung eines Luftfahrzeugs, umfassend die folgenden Schritte:

- Empfangen (S101) von mindestens einer ersten Anweisung zum Ändern der Ausrichtung eines aktuellen Geschwindigkeitsvektors des Luftfahrzeugs,
- Bestimmen (S103) eines Zielgeschwindigkeitsvektors ausgehend von der mindestens einen erhaltenen Anweisung und
- Bestimmen (S104), ausgehend von dem mindestens einen Zielgeschwindigkeitsvektor, mindestens eines Betätigungsbefehls an mindestens einen Aktuator des Luftfahrzeugs, um das Bewegen des Luftfahrzeugs nach der mindestens einen erhaltenen Anweisung zu ändern,

wobei das Verfahren **dadurch gekennzeichnet, dass** es ferner die folgenden Schritte aufweist:

- Empfangen von einer Anweisung zum Ändern der Ausrichtung des bestimmten Zielgeschwindigkeitsvektors und
- Ändern des Zielgeschwindigkeitsvektors in Abhängigkeit von der empfangenen Anweisung, wobei der Betätigungsbefehl ausgehend von dem auf diese Weise geänderten Zielgeschwindigkeitsvektor bestimmt wird.

**2.** Verfahren nach Anspruch 1, wobei der mindestens eine Aktuator geeignet ist, eine Steuerfläche (10-16) des Luftfahrzeugs in Bewegung zu versetzen.

**3.** Verfahren nach einem der vorhergehenden Ansprüche, wobei mindestens eine Anweisung zum Ändern des aktuellen Geschwindigkeitsvektors des Luftfahrzeugs einen Kurswinkel der Flugbahn betrifft.

**4.** Verfahren nach einem der vorhergehenden Ansprüche, wobei mindestens eine Anweisung zum Ändern des aktuellen Geschwindigkeitsvektors des Luftfahrzeugs einen Neigungswinkel der Flugbahn betrifft.

**5.** Verfahren nach einem der vorangehenden Ansprüche, ferner umfassend die folgenden Schritte:

- Erfassen (S100) eines Inbewegungsetzens einer Steuerschnittstelle,
- Bestimmen (S102) der mindesten einen Anweisung zum Ändern in Abhängigkeit von der erfassten Bewegung.

**6.** Verfahren nach einem der vorhergehenden Ansprüche, ferner umfassend einen Schritt des Erzeugens (S113) von mindestens einem Anzeigesignal einer graphischen Steuerschnittstelle, die eine Darstellung des aktuellen Geschwindigkeitsvektors aufweist, wobei das Signal konfiguriert ist, um das Anzeigen einer Darstellung des Zielgeschwindigkeitsvektors zu bewirken.

**7.** Verfahren nach Anspruch 6, ferner umfassend einen Schritt des Erzeugens (S121) von einem Anzeigesignal, das konfiguriert ist, um das Anzeigen eines Hilfselements zum Ausrichten mit einer Ziel-Steuerungsbahn zu bewirken, wobei das Element mit der graphischen Darstellung des Zielgeschwindigkeitsvektors verbunden wird.

**8.** Verfahren nach Anspruch 6 oder 7, ferner umfassend einen Schritt des Erzeugens eines Alarmsignals im Falle einer Anomalie der Ausrichtung mit der Zielbahn und/oder einer Anomalie der Übereinstimmung zwischen dem Zielgeschwindigkeitsvektor und der Zielbahn.

**9.** Verfahren nach einem der Ansprüche 6 bis 8, wobei das mindestens eine Signal konfiguriert ist, um das Anzeigen der Darstellung des Zielgeschwindigkeitsvektors gleichzeitig mit dem Anzeigen der Darstellung des aktuellen Geschwindigkeitsvektors zu bewirken.

**10.** Computerprogramm, umfassend Anleitungen zum Umsetzen eines Verfahrens nach einem der Ansprüche 1 bis 9, wenn es von einem Prozessor eines Systems zur Bedienung der Steuerung eines Luftfahrzeugs geladen und ausgeführt wird.

**EP 2 662 744 B1**

**11.** System zur Bedienung der Steuerung eines Luftfahrzeugs, umfassend eine Verarbeitungseinheit (41), die konfiguriert ist, um mindestens eine erste Anweisung zum Ändern der Ausrichtung eines aktuellen Geschwindigkeitsvektors des Luftfahrzeugs zu erhalten, einen Zielgeschwindigkeitsvektor des Luftfahrzeugs ausgehend von der mindestens einen erhaltenen Anweisung zu bestimmen und ausgehend von mindestens dem einen Zielgeschwindigkeitsvektor mindestens einen Betätigungsbefehl an mindestens einen Aktuator des Luftfahrzeugs zu bestimmen, um das Bewegen des Luftfahrzeugs nach der mindestens einen erhaltenen Anweisung zu ändern, wobei das System zur Bedienung **dadurch gekennzeichnet ist, dass** die Steuereinheit ferner konfiguriert ist, um eine Anweisung zum Ändern der Ausrichtung des bestimmten Zielgeschwindigkeitsvektors zu erhalten und den Zielgeschwindigkeitsvektor in Abhängigkeit von der empfangenen Anweisung zu ändern, wobei der Betätigungsbefehl ausgehend von dem auf diese Weise geänderten Zielgeschwindigkeitsvektor bestimmt wird.

**12.** System nach Anspruch 11, wobei die Verarbeitungseinheit ferner konfiguriert ist, um mindestens ein Anzeigesignal einer graphischen Steuerschnittstelle zu erzeugen, die eine Darstellung des aktuellen Geschwindigkeitsvektors aufweist, wobei das Signal konfiguriert ist, um das Anzeigen einer Darstellung des Zielgeschwindigkeitsvektors zu bewirken.

**13.** System nach Anspruch 12, wobei die Verarbeitungseinheit ferner konfiguriert ist, um ein Anzeigesignal zu erzeugen, das konfiguriert ist, um das Anzeigen eines Hilfselements zum Ausrichten mit einer Ziel-Steuerungsbahn zu bewirken, wobei das Element mit der graphischen Darstellung des Zielgeschwindigkeitsvektors verbunden ist.

**14.** Luftfahrzeug, umfassend ein System nach einem der Ansprüche 11 bis 13.

**Claims**

**1.** Method for controlling the piloting of an aircraft comprising the following steps of:

- receiving (S101) at least one first instruction for modification of the orientation of a current velocity vector of the aircraft,
- determining (S103) a target velocity vector of the aircraft, on the basis of said at least one first instruction received, and
- determining (S104), on the basis at least of said target velocity vector, of at least one actuation command intended for at least one actuator of the aircraft in order to modify the movement of the aircraft according to said at least one first instruction received,

the method being **characterized in that** it further comprises the following steps of:

- receiving an instruction for modification of the orientation of the determined target velocity vector, and
- modifying the target velocity vector as a function of said instruction received, said actuation command being determined on the basis of the thus-modified target velocity vector.

**2.** Method according to claim 1, in which said at least one actuator is capable of setting a control surface (10-16) of the aircraft in motion.

**3.** Method according to either of the preceding claims, in which at least one instruction for modification of the current velocity vector of the aircraft relates to a flight path track angle.

**4.** Method according to one of the preceding claims, in which at least one instruction for modification of the current velocity vector of the aircraft relates to a flight path slope angle.

**5.** Method according to one of the preceding claims, further comprising the following steps of:

- detecting (S100) a setting in motion of a piloting interface,
- determining (S102) said at least one modification instruction as a function of the movement detected.

**6.** Method according to one of the preceding claims, also comprising a step of generating (S113) at least one graphic piloting interface display signal comprising a representation of said current velocity vector, said signal being configured to cause the display of a representation of the target velocity vector.

7. Method according to claim 6, further comprising a step of generating (S121) a display signal configured to cause the display of an element to aid alignment with a target piloting path, said element being associated with said graphic representation of the target velocity vector.

8. Method according to claim 6 or 7, further comprising a step of generating a warning signal in the event of an anomaly in alignment with the target path and/or an anomaly in correlation between the target velocity vector and the target path.

9. Method according to one of claims 6 to 8, wherein said at least one signal is configured to cause the display of the representation of the target velocity vector simultaneously with the display of the representation of said current velocity vector.

10. Computer program comprising instructions for the implementation of a method according to one of claims 1 to 9, when it is loaded and executed by an aircraft piloting control system processor.

11. Aircraft piloting control system comprising a processing unit (41) configured to receive at least one first instruction for modification of the orientation of a current velocity vector of the aircraft, to determine a target velocity vector of the aircraft, on the basis of said at least one first instruction received, and to determine, on the basis at least of said target velocity vector, at least one actuation command intended for at least one actuator of the aircraft in order to modify the movement of the aircraft according to said at least one first instruction received, the control system being **characterised in that** said control unit is moreover configured to receive an instruction for modification of the orientation of the target velocity vector determined, and modify the target velocity vector as a function of said received instruction, said actuation command being determined on the basis of the thus-modified target velocity vector.

12. System according to claim 11, wherein the processing unit is moreover configured to generate at least one graphic piloting interface display signal comprising a representation of said current velocity vector, said signal being configured to cause the display of a representation of the target velocity vector.

13. System according to claim 12, wherein the processing unit is moreover configured to generate a display signal configured to cause the display of an element for aiding alignment with a target piloting path, said element being associated with said graphic representation of the target velocity vector.

14. Aircraft comprising a system according to one of claims 11 to 13.

# Fig. 1

# Fig. 2

GS 146

Vecteur vitesse

Plan vertical
local

Nord

Plan horizontal
local

Est

Bas

Fig. 3

47

COM

43

40

PROC

41

45

HUD

MEM

42

46

PFD    ND

44

48

Fig. 4

DQSTK
DPSTK

$nz_{com}$
$\Phi_{com}$

$\dot{\gamma}_{com}$
$\dot{X}_{com}$

$\gamma_{com}$
$X_{com}$

| Interf. | → | CONV | → | g/V | → | $\int$ | → | Loi de contrôle | → | Surfaces de contrôle |

54
55

$\widetilde{50}$
$\widetilde{51}$
$\widetilde{52}$
$\widetilde{53}$

nz, $\gamma$, p, $\Phi$, $\chi$ ...

| Ecran | 56

## Fig. 5

## Fig. 6

EP 2 662 744 B1

Fig. 7

Fig. 8

16

(a)  (b)  (c)

(d)  (e)  (f)

Fig. 9

Réception d'un signal d'actionnement d'une interface de pilotage — S100

Conversion du signal d'actionnement reçu en signal d'instruction de modification du vecteur vitesse courant de l'aéronef — S101

Réception du signal d'instruction — S102

Détermination d'un vecteur vitesse cible à partir du signal d'instruction reçu — S103

Détermination d'un signal de commande d'actionnement d'un actionneur de l'aéronef à partir du vecteur vitesse cible — S104

Transmission du signal de commande à destination de l'actionneur — S105

## Fig. 10

Génération d'un signal d'affichage d'une
représentation du vecteur vitesse courant — S110

Transmission du signal vers un dispositif
d'interface avec le pilote — S111

Réception d'un signal représentant
le vecteur vitesse cible — S112

Génération d'un signal d'affichage d'une
représentation du vecteur vitesse cible — S113

Transmission du signal vers un dispositif
d'interface avec le pilote — S114

# Fig. 11

Réception d'un signal d'activation
de l'aide à l'alignement — S120

Génération d'un signal d'affichage
représentant un élément d'aide à l'alignement — S121

Transmission du signal vers un dispositif
d'interface avec le pilote — S122

# Fig. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040093130 A1

- US 5001646 A